# EUROPÄISCHE PATENTSCHRIFT

(11) **EP 4 019 914 B1**
(45) Veröffentlichungstag und Bekanntmachung des Hinweises auf die Patenterteilung: **24.07.2024**
(21) Anmeldenummer: 20216541.1
(22) Anmeldetag: 22.12.2020
(51) Int. Cl.: G01F 23/288, G01F 25/20

(54) **GRENZSCHALTER, SYSTEM UND VERFAHREN**
LIMIT SWITCH, SYSTEM AND METHOD
DÉTECTEUR DE NIVEAU, SYSTÈME ET PROCÉDÉ

(43) Veröffentlichungstag der Anmeldung: 29.06.2022
(73) Patentinhaber: BERTHOLD TECHNOLOGIES GmbH & Co. KG, 75323 Bad Wildbad (DE)
(72) Erfinder: Daibenzeiher, Tobias, 75217 Birkenfeld (DE); Müller, Steffen, 75173 Pforzheim (DE)
(74) Vertreter: Patentanwälte Ruff, Wilhelm, Beier, Dauster & Partner mbB

(56) Entgegenhaltungen:
- DE-A1- 10 043 629
- DE-A1- 102016 122 048
- DE-A1- 102016 222 298
- DE-A1- 4 233 278
- DE-B- 1 179 729
- JP-A- 2017 146 221
- JP-A- S63 247 623

## Beschreibung

### ANWENDUNGSGEBIET UND STAND DER TECHNIK

Die Erfindung betrifft einen Grenzschalter zur Erkennung einer Unter- oder Überschreitung eines Minimal- oder Maximal-Grenzstands durch ein Messgut, ein zugehöriges System sowie ein zugehöriges Verfahren.

Grenzschalter werden in unterschiedlichen Anwendungen eingesetzt, um minimale und maximale Grenzstände zu überwachen. Die Überwachung erfolgt typischerweise berührungslos. Komponenten eines Grenzschalters können typischerweise so angeordnet werden, dass kein Kontakt zum Messgut besteht. Sie können beispielsweise an den unterschiedlichsten Behältern wie Lagertanks, Heißgutbunkern, Rührwerksbehältern, Hochdruckreaktoren, Zyklonen oder Übergabeschurren angeordnet werden.

Behälter werden dabei typischerweise an einer vorgegebenen Grenzhöhe durchstrahlt. Wenn bzw. falls der Füllstand diese Grenzhöhe erreicht, wird die Strahlung deutlich geschwächt oder völlig absorbiert. Diese starke und plötzliche Strahlungsschwächung kann von einem Detektor erfasst werden. Dementsprechend kann beispielsweise ein Alarm ausgegeben werden. Allerdings hat es sich gezeigt, dass Störstrahlung die Funktionalität von Grenzschaltern beeinträchtigen kann.

Die DE 42 33 278 A1 offenbart: Zur Unterdrückung von Fremdstrahlungseinflüssen bei radioaktiven Meßverfahren werden Anfang und Ende der Fremdstrahlung und das Erreichen eines stabilen Zustands der Fremdstrahlung ermittelt. Die Differenz zwischen dem Meßergebnis vor dem Anfang der Fremdstrahlung und dem Meßergebnis nach dem Erreichen des stabilen Zustands wird ermittelt, und während des Bestehens der Fremdstrahlung wird das Meßergebnis um die ermittelte Differenz verringert. Da die ermittelte Differenz der von der Fremdstrahlung verursachten Änderung des Meßergebnisses entspricht, ist das durch die Verringerung um diese Differenz erhaltene resultierende Meßergebnis gleich dem Meßergebnis, das erhalten würde, wenn die Fremdstrahlung nicht vorhanden wäre.

Die JP 2017 146221 A offenbart ein Flüssigkeitspegelmesssystem, mit dem es möglich ist, einen Fehler einer Erfassungseinheit in einem Strahlungspegelmesser angemessen zu bestimmen und einen Flüssigkeitspegel in einem Behälter, wie beispielsweise einem Tank, stabil zu messen. Ein Flüssigkeitspegelmesssystem misst einen Flüssigkeitspegel in einem Behälter, wobei das Flüssigkeitspegelmesssystem umfasst: m Strahlungsquelleneinheiten (m = ganze Zahl kleiner oder gleich n) zum Bestrahlen eine Strahlung; n Erfassungseinheiten (n = ganze Zahl größer oder gleich 2) zum Erfassen der Strahlungsmenge; und eine Überwachungseinheit zum Überwachen einer Korrelation von n Spektren mit einem Flüssigkeitspegel, der aus der von jeder der n Erfassungseinheiten erfassten Strahlungsmenge als ein sequentielles Spektrum ermittelt wird. Die Überwachungseinheit überwacht, ob die n Spektren ein ähnliches Verhalten zeigen oder nicht.

Die DE 10 2016 122048 A1 offenbart ein Verfahren zur Bestimmung einer Restbetriebs-Zeitdauer einer Detektor-Einheit mit einem Photomultiplier, zum Einsatz in einem radiometrischen Dichte- oder Füllstandsmessgerät. Bei diesem Verfahren wird die Regelspannung des Photomultipliers über zumindest einen vorbestimmten Zeitraum aufgezeichnet, eine zeitliche Änderungsfunktion anhand der während des vorbestimmten Zeitraums aufgezeichneten Regelspannung ermittelt, und die Restbetriebs-Zeitdauer bis zum Erreichen einer maximalen Regelspannung mittels der zeitlichen Änderungsfunktion und der aktuellen Regelspannung, die zu der aktuellen Betriebszeit vorherrscht, berechnet. Durch das Verfahren wird die Möglichkeit eröffnet, die Restbetriebs-Zeitdauer der Detektor-Einheit zu approximieren und somit rechtzeitig in Erfahrung zu bringen, bis zu welchem Zeitpunkt die erforderlichen Wartungsmaßnahmen, insbesondere der alterungsbedingte Austausch des Photomultipliers, durchgeführt werden müssen.

Die DE 10 2016 222298 A1 offenbart ein radiometrisches Messgerät zur Bestimmung eines Füllstandes eines Mediums in einem Behälter, welches einen szintillierenden Lichtwellenleiter aufweist, der dazu ausgestaltet ist, eine das Medium durchstrahlende ionisierende erste Strahlung zumindest teilweise in eine zweite elektromagnetische Strahlung umzuwandeln. Weiter weist das Messgerät einen ersten Photodetektor zum Erzeugen eines ersten elektrischen Signals und einen zweiten Photodetektor zum Erzeugen eines zweiten elektrischen Signals auf, wobei die Photodetektoren an Enden des Lichtwellenleiters optisch gekoppelt sind. Weiter weist das Messgerät eine Auswerteelektronik auf, welche dazu eingerichtet ist, basierend auf den ersten elektrischen Signalen und den zweiten elektrischen Signalen eine Häufigkeitsverteilung zu ermitteln, welche eine Häufigkeit von mit dem Messgerät detektierten Ereignissen in Abhängigkeit einer Füllhöhe des Mediums in dem Behälter angibt, wobei die Auswerteelektronik dazu eingerichtet ist, basierend auf der Häufigkeitsverteilung einen Maximalwert und einen Minimalwert der Häufigkeit detektierter Ereignisse, und basierend auf der Häufigkeitsverteilung und/oder basierend auf der Häufigkeit detektierter Ereignisse einen tatsächlichen Füllstand des Mediums in dem Behälter zu ermitteln.

### AUFGABE UND LÖSUNG

Es ist eine Aufgabe der Erfindung, einen Grenzschalter bereitzustellen, welcher im Vergleich zu bekannten Ausführungen besser, beispielsweise mit besserer Toleranz gegen Störstrahlung, ausgeführt ist. Es ist des Weiteren eine Aufgabe der Erfindung, ein zugehöriges System mit einem solchen Grenzschalter sowie ein zugehöriges Verfahren bereitzustellen.

Dies wird erfindungsgemäß durch einen Grenzschalter, ein System sowie ein Verfahren gemäß den jeweiligen Hauptansprüchen erreicht. Vorteilhafte Ausgestaltungen können beispielsweise den jeweiligen Unteransprüchen entnommen werden.

Die Erfindung betrifft einen, insbesondere radiometrischen, Grenzschalter bzw. ein, insbesondere radiometrisches, Grenzschaltersystem zur, insbesondere automatischen, Erkennung einer Unter- oder Überschreitung eines, insbesondere vorgegebenen bzw. vordefinierten, Minimal- oder Maximal-Grenzstands durch ein Messgut bzw. einen Stoff angeordnet innerhalb eines Hohlkörpers, insbesondere eines Behälters. Der Grenzschalter umfasst bzw. weist eine, insbesondere elektrische, Detektoreinrichtung auf, wobei die Detektoreinrichtung zur, insbesondere automatischen, Erfassung von radiometrischer Strahlung, insbesondere Gammastrahlung, mindestens das Messgut mindestens teilweise, insbesondere vollständig, durchdringend an mindestens, insbesondere genau, zwei verschiedenen Punkten entlang einer Änderungsrichtung eines Füllstands bzw. eines Niveaus des Messguts ausgebildet bzw. konfiguriert ist. Der Grenzschalter umfasst bzw. weist eine, insbesondere elektrische, Auswerteeinrichtung auf, wobei die Auswerteeinrichtung dazu ausgebildet ist, eine Änderung einer von der Detektoreinrichtung an mindestens den zwei Punkten erfassten radiometrischen Strahlung, insbesondere automatisch, zu erkennen. Sie ist ferner dazu ausgebildet bzw. konfiguriert, eine Änderungszeitdauer, insbesondere einen Wert der Änderungszeitdauer, oder eine der Änderungszeitdauer korrespondierende Größe, insbesondere einen Wert der Größe, für die erkannte Änderung, insbesondere automatisch, zu bestimmen. Die Auswerteeinrichtung ist ferner dazu ausgebildet bzw. konfiguriert, falls die bestimmte Änderungszeitdauer oder die Größe ein insbesondere vorgegebenes bzw. vordefiniertes Änderungszeitkriterium erfüllt, wobei das Änderungszeitkriterium dafür charakteristisch ist, dass die Änderungszeitdauer gleich oder größer als ein, insbesondere vorgegebener bzw. vordefinierter, Zeitschwellenwert ist, die Unter- oder Überschreitung, insbesondere automatisch, zu bestimmen.

Mittels des Grenzschalters ist es möglich, auf eventuell auftretende Störstrahlung besser zu reagieren als dies bei Grenzschaltern gemäß dem Stand der Technik möglich war. Insbesondere kann durch die Verwendung des Änderungszeitkriteriums erkannt werden, wenn bzw. falls eine Änderung, insbesondere eine Signaländerung, zu schnell erfolgt und somit nicht auf eine tatsächliche Änderung des Füllstands des Messguts zurückzuführen ist, sondern auf vorhandene Störstrahlung. Insbesondere tritt derartige Störstrahlung typischerweise an mindestens den zwei Punkten in identischer oder zumindest sehr ähnlicher Ausprägung auf, so dass auftretende Störstrahlung zu einer Änderung, insbesondere einer Signaländerung, an mindestens den zwei Punkten schlagartig bzw. gleichzeitig führt. Dementsprechend ist die bestimmte Änderungszeitdauer bzw. Größe in diesem Fall typischerweise sehr klein. Insbesondere kann eine Änderung schneller erfolgen als dies durch einen Befüll- oder Entnahmeprozess bzw. -vorgang des Messguts möglich wäre. Derartige Prozesse bzw. Vorgänge sind typischerweise durch geometrische Verhältnisse wie beispielsweise Behältergrößen oder Durchlasskapazitäten begrenzt. Eine entsprechend langsame Änderung deutet somit auf einen tatsächlichen Prozess bzw. Vorgang des Unter- oder Überschreitens des Minimal- oder Maximal-Grenzstands hin.

Bei dem Messgut kann es sich beispielsweise um ein festes oder flüssiges oder gasförmiges Material handeln, welches in dem Hohlkörper gelagert wird. Typischerweise sind dabei Vorrichtungen zum Befüllen und zur Entnahme des Messguts vorhanden, wobei ein Minimal- oder Maximal-Grenzstand beispielsweise eine Ebene in dem Hohlkörper definieren kann, welche nicht unter- oder überschritten werden soll und/oder Anlass zum Nachfüllen oder zur Entnahme gibt. Die radiometrische Strahlung, insbesondere Gammastrahlung, kann insbesondere das Messgut durchdringen, wenn an der entsprechenden Ebene Messgut vorhanden ist, und kann dabei abgeschwächt werden. Ist kein Messgut vorhanden, so braucht oder kann die Strahlung durch das Messgut nicht abgeschwächt zu werden und kann somit die Detektoreinrichtung in wesentlich größerer Intensität erreichen. Dies kann für eine Grenzschalterfunktionalität verwendet werden.

Die Auswerteeinrichtung kann beispielsweise eine programmierbare oder fest verdrahtete elektronische Einrichtung sein, in welcher die beschriebene Funktionalität implementiert ist. Die zu der Änderungszeitdauer korrespondierende Größe kann beispielsweise in definierter Weise mit der Änderungszeitdauer übereinstimmen bzw. in Beziehung stehen bzw. von der Änderungszeitdauer abhängen. Die Änderungszeitdauer kann insbesondere anzeigend dafür sein, wie schnell eine vermeintliche Unter- oder Überschreitung des Minimal- oder Maximal-Grenzstands erfolgt. Erfolgt diese langsam genug, so deutet dies darauf hin, dass tatsächlich das Messgut den Minimal- oder Maximal-Grenzstand unter- oder überschreitet. Erfolgt die Änderung jedoch zu schnell, so deutet dies darauf hin, dass Störstrahlung verantwortlich für die Änderung der erfassten radiometrischen Strahlung war.

Der Grenzschalter braucht nicht, insbesondere die Detektoreinrichtung und/oder die Auswerteeinrichtung brauchen/braucht nicht, zur Erkennung, insbesondere zur Erfassung und/oder zur Bestimmung, einer quantitativen Aussage, z.B. eines Werts zwischen Null Prozent und Hundert Prozent, ausgebildet sein. Insbesondere kann die qualitative Aussage "Unterschreitung ja oder nein" und/oder "Überschreitung ja oder nein" ausreichend sein.

Die Detektoreinrichtung kann mindestens einen Szintillator und/oder mindestens einen Photomultiplier, insbesondere einen Silizium-Photomultiplier, zur Erfassung der Strahlung aufweisen.

Höhenverschieden kann auf verschiedener Höhe entlang der Änderungsrichtung bedeuten.

Die Detektoreinrichtung umfasst bzw. weist einen ersten Detektor auf. Insbesondere kann dieser als ein erster Punktdetektor ausgebildet bzw. konfiguriert sein. Die Detektoreinrichtung umfasst bzw. weist einen von dem ersten Detektor verschiedenen zweiten Detektor auf. Insbesondere kann dieser als ein zweiter Punktdetektor ausgebildet bzw. konfiguriert sein. Der erste Detektor ist zur, insbesondere automatischen, Erfassung der Strahlung an einem ersten Punkt der zwei Punkte ausgebildet bzw. konfiguriert. Der zweite Detektor ist zur, insbesondere automatischen, Erfassung der Strahlung an einem von dem ersten Punkt verschiedenen, insbesondere höhenverschiedenen, zweiten Punkt der zwei Punkte ausgebildet bzw. konfiguriert. Somit kann an jedem der beiden Punkte ein jeweils separater Detektor, insbesondere ein Punktdetektor, zur Verfügung stehen. Die beiden Punkte können beispielsweise vertikal übereinander angeordnet sein. Dementsprechend können die beiden Detektoren angeordnet sein. Senkt sich nun beispielsweise der Füllstand des Messguts, so kann zunächst beim oberen Detektor die Strahlung nicht mehr durch das Messgut abgeschwächt werden, und anschließend kann beim unteren Detektor die Strahlung nicht mehr durch das Messgut abgeschwächt werden. Bei einer normalen Entleerung erfolgt dies typischerweise mit einem bekannten Mindest-Zeitabstand, welcher zur Unterscheidung von Störstrahlung in vorteilhafter Weise verwendet werden kann. Insbesondere können die Detektoren jeweils, insbesondere mindestens, einen Szintillator, insbesondere einen Punktszintillator, und/oder einen Photomultiplier, insbesondere einen Silizium-Photomultiplier, zur Erfassung der Strahlung aufweisen. Zusätzlich oder alternativ können die Detektoren baugleich sein.

Gemäß einer Ausführung kann die Auswerteeinrichtung dazu ausgebildet bzw. konfiguriert sein, falls die bestimmte Änderungszeitdauer oder die Größe das Änderungszeitkriterium nicht erfüllt, ein Vorhandensein von Stör- bzw. Fremdstrahlung, insbesondere automatisch, zu bestimmen. Dadurch kann aktiv Störstrahlung erkannt werden, beispielsweise weil die erwähnte Änderung zu schnell erfolgte.

Gemäß einer Ausführung kann der Grenzschalter eine, insbesondere elektrische, Ausgabe- und/oder Übertragungseinrichtung aufweisen bzw. umfassen, wobei die Ausgabe- und/oder Übertragungseinrichtung zur, insbesondere automatischen, Ausgabe und/oder Übertragung einer, insbesondere binären, Information, insbesondere eines Werts der Information, über die bestimmte Unter- oder Überschreitung, und insbesondere die bestimmte Störstrahlung, ausgebildet ist. Dies erlaubt eine vorteilhafte Auswertung des Grenzschalters, so dass erzeugte Signale über eine erkannte Unter- oder Überschreitung oder auch über eine erkannte Störstrahlung sofort elektronisch weiterverarbeitet werden können. Insbesondere kann die Information "Unterschreitung ja oder nein" und/oder "Überschreitung ja oder nein", insbesondere und/oder "Störstrahlung ja oder nein", sein.

Gemäß einer Ausführung kann der Grenzschalter eine, insbesondere elektrische, Vorgabeeinrichtung bzw. eine Eingabeeinrichtung aufweisen, wobei die Vorgabeeinrichtung zur variabel einstellbaren Vorgabe des Änderungszeitkriteriums und/oder des Zeitschwellenwerts durch einen Benutzer ausgebildet ist. Dadurch kann das Änderungszeitkriterium und/oder der Zeitschwellenwert in einfacher Weise geändert werden. Entsprechende Werte können beispielsweise abgespeichert werden, so dass sie jederzeit für einen Vergleich zur Verfügung stehen.

Gemäß einer Ausführung kann die Detektoreinrichtung zur Anordnung mit mindestens den zwei Punkten in mindestens, insbesondere nur, einem, insbesondere einzigen, Strahlungsfeld mindestens, insbesondere nur, einer, insbesondere einzigen, Strahlungsquelle, insbesondere mindestens eines Punktstrahlers, ausgebildet bzw. konfiguriert sein. Mindestens die Strahlungsquelle kann zur Emission der Strahlung, insbesondere von Gammastrahlung mit einer diskreten Isotop-Gamma-Energie, insbesondere einem diskreten Isotop-Gamma-EnergieWert, in mindestens das Messgut ausgebildet bzw. konfiguriert sein. Insbesondere kann die Detektoreinrichtung zur Anordnung mit mindestens den zwei Punkten in dem selben Strahlungsfeld der Strahlungsquelle ausgebildet bzw. konfiguriert sein. Dies erlaubt eine vorteilhafte Versorgung mit Strahlung, welche für die bereits beschriebenen Messzwecke verwendet werden kann. Hierbei handelt es sich um diejenige Strahlung, welche gewünschterweise vorhanden ist und sich damit von Störstrahlung abgrenzt. Beispielsweise können zwei Strahlungsquellen verwendet werden.

Dabei kann beispielsweise eine Strahlungsquelle pro Punkt verwendet werden. Bevorzugt können diese ein gemeinsames Strahlungsfeld erzeugen. Besonders bevorzugt wird in nur einem einzigen Strahlungsfeld nur eine einzige Strahlungsquelle verwendet.

Gemäß einer Ausführung kann der erste Detektor zu einer Änderung eines ersten, insbesondere binären, Schaltsignals, insbesondere eines Werts des Schaltsignals, verursacht durch die Änderung der von dem ersten Detektor an dem ersten Punkt erfassten Strahlung ausgebildet bzw. konfiguriert sein. Dementsprechend kann der zweite Detektor zu einer Änderung eines zweiten, insbesondere binären, Schaltsignals, insbesondere eines Werts des Schaltsignals, verursacht durch die Änderung der von dem zweiten Detektor an dem zweiten Punkt erfassten Strahlung ausgebildet bzw. konfiguriert sein. Dadurch kann in einfacher Weise eine Strahlungsänderung erkannt und weiterverarbeitet werden.

Die Auswerteeinrichtung kann dazu ausgebildet bzw. konfiguriert sein, die Änderung basierend auf der Änderung des ersten Schaltsignals und der Änderung des zweiten Schaltsignals zu erkennen. Zusätzlich oder alternativ kann sie dazu ausgebildet bzw. konfiguriert sein, die Änderungszeitdauer basierend auf einer, insbesondere als eine, Zeitdifferenz zwischen der Änderung des ersten Schaltsignals und der Änderung des zweiten Schaltsignals, insbesondere automatisch, zu bestimmen.

Insbesondere kann die Änderung dabei als Grundlage einer möglichen Erkennung verstanden werden. Die Änderungszeitdauer dient wiederum zur Unterscheidung zwischen einer tatsächlichen Unter- oder Überschreitung des Minimal- oder Maximal-Grenzstands von einer Einwirkung einer Störstrahlung.

Gemäß einer Ausführung kann der erste Detektor zur, insbesondere automatischen, Erzeugung eines ersten Detektorsignals, insbesondere eines Werts des Detektorsignals, verursacht durch die Erfassung der Strahlung ausgebildet bzw. konfiguriert sein. Der zweite Detektor kann zur, insbesondere automatischen, Erzeugung eines zweiten Detektorsignals, insbesondere eines Werts des Detektorsignals, verursacht durch die Erfassung der Strahlung ausgebildet bzw. konfiguriert sein. Die Auswerteeinrichtung kann dazu ausgebildet bzw. konfiguriert sein, die Änderung basierend auf einem Vorhandensein eines durch die Änderung der erfassten Strahlung verursachten veränderten Unterschieds, insbesondere einer veränderten Differenz, zwischen dem erzeugten ersten Detektorsignal und dem erzeugten zweiten Detektorsignal zu erkennen. Zusätzlich oder alternativ kann die Auswerteeinrichtung dazu ausgebildet bzw. konfiguriert sein, die Änderungszeitdauer basierend auf einer, insbesondere als eine, Unterschiedszeitdauer eines Vorhandenseins eines durch die Änderung der erfassten Strahlung verursachten veränderten Unterschieds, insbesondere einer veränderten Differenz, zwischen dem erzeugten ersten Detektorsignal und dem erzeugten zweiten Detektorsignal zu bestimmen.

Durch eine solche Vorgehensweise kann in vorteilhafter Weise eine Änderung bestimmt werden, und es kann ebenso die Änderungszeitdauer als Grundlage für eine Abgrenzung zur Störstrahlung bestimmt werden.

Gemäß einer Ausführung kann die Auswerteeinrichtung dazu ausgebildet bzw. konfiguriert sein, eine ordnungsgemäße Funktion des Grenzschalters, insbesondere des ersten Detektors und des zweiten Detektors, basierend auf einer zeitlichen Reihenfolge der Änderung des ersten Schaltsignals und der Änderung des zweiten Schaltsignals und/oder des veränderten Unterschieds zu bestimmen. Dadurch kann beispielsweise sichergestellt werden, dass bei einem Prozess bzw. Vorgang, welcher ein Absinken einer Füllhöhe des Messguts nach sich zieht, eine korrekte Detektion einer Unterschreitung eines Messstands nur dann erfolgen kann, wenn bzw. falls eine stärkere Strahlung zunächst bei dem oberen Detektor erkannt wird. Dadurch kann die Sicherheit gegen eventuelle Fehlinformationen noch weiter erhöht werden. Auch in umgekehrter Richtung ist dies möglich, d.h. bei einem Ansteigen des Füllstands.

Gemäß einer Ausführung kann ein Abstand, insbesondere ein Wert des Abstands, zwischen den zwei Punkten, insbesondere dem ersten Detektor und dem zweiten Detektor, insbesondere entlang der Änderungsrichtung, durch einen Benutzer variabel einstellbar sein. Dies ermöglicht eine Anpassung vor Ort an unterschiedliche Gegebenheiten. Identisch bzw. baugleich produzierte Grenzschalter können somit für unterschiedliche Anwendungszwecke verwendet werden.

Zusätzlich oder alternativ kann ein Abstand, insbesondere ein Wert des Abstands, zwischen den zwei Punkten, insbesondere dem ersten Detektor und dem zweiten Detektor, insbesondere entlang der Änderungsrichtung, minimal 100 mm (Millimeter), insbesondere minimal 150 mm, und/oder maximal 500 mm, insbesondere maximal 250 mm, insbesondere 200 mm, sein bzw. betragen. Derartige Werte haben sich für typische Anwendungen als vorteilhaft herausgestellt. Auch andere Werte können jedoch verwendet werden. Insbesondere können so beide Detektoren die, insbesondere selbe, Störstrahlung erfassen.

Zusätzlich oder alternativ kann der Zeitschwellenwert minimal 0,25 s (Sekunden), insbesondere minimal 0,5 s, und/oder maximal 5 s, insbesondere maximal 2 s, insbesondere 1 s, sein bzw. betragen. Auch derartige Werte haben sich für typische Anwendungen als vorteilhaft erwiesen, wobei auch andere Werte verwendet werden können.

Die Erfindung betrifft ferner ein System, wobei das System einen, insbesondere den, Grenzschalter wie hierin beschrieben aufweist bzw. umfasst. Bezüglich des Grenzschalters kann auf alle hierin beschriebenen Ausführungen zurückgegriffen werden. Das System umfasst bzw. weist ferner einen, insbesondere den, Hohlkörper, wobei der Hohlkörper zur Aufnahme des Messguts ausgebildet bzw. konfiguriert ist, und/oder mindestens eine, insbesondere die, Strahlungsquelle auf. Insbesondere kann es sich bei der Strahlungsquelle um einen, insbesondere den, Punktstrahler handeln. Insbesondere mindestens die Strahlungsquelle ist zur, insbesondere automatischen, Emission der Strahlung, insbesondere von Gammastrahlung mit einer, insbesondere der, diskreten Isotop-Gamma-Energie, in mindestens das Messgut ausgebildet bzw. konfiguriert.

Mittels eines solchen Systems können die weiter oben bereits beschriebenen Vorteile erreicht werden.

Gemäß einer Ausführung kann die Strahlungsquelle Co-60 (Kobalt 60) und/oder Cs-137 (Cäsium 137) aufweisen, insbesondere sein. Derartige Strahler haben sich für typische Anwendungen als vorteilhaft herausgestellt. Auch andere Strahler, beispielsweise andere radioaktive Isotope, können jedoch verwendet werden.

Die Erfindung betrifft des Weiteren ein, insbesondere automatisches, Verfahren zur, insbesondere automatischen, Erkennung einer, insbesondere der, Unter- oder Überschreitung eines, insbesondere des, Minimal- oder Maximal-Grenzstands durch ein, insbesondere das, Messgut angeordnet innerhalb eines, insbesondere des, Hohlkörpers mittels eines, insbesondere des, Grenzschalters wie hierin beschrieben und/oder eines, insbesondere des, Systems wie hierin beschrieben, wobei das Verfahren folgende Schritte aufweist bzw. umfasst:
- Erkennen, insbesondere automatisches Erkennen, der Änderung der von der Detektoreinrichtung an mindestens den zwei Punkten erfassten radiometrischen Strahlung,
- Bestimmen, insbesondere automatisches Bestimmen, der Änderungszeitdauer oder der der Änderungszeitdauer korrespondierenden Größe für die erkannte Änderung, und
falls die bestimmte Änderungszeitdauer oder die Größe das Änderungszeitkriterium erfüllt, wobei das Änderungszeitkriterium dafür charakteristisch ist, dass die Änderungszeitdauer gleich oder größer als der Zeitschwellenwert ist, Bestimmen, insbesondere automatisches Bestimmen, der Unter- oder Überschreitung.

Mittels eines solchen Verfahrens können die weiter oben bereits beschriebenen Vorteile erreicht werden. Bezüglich des Grenzschalters und/oder des Systems kann auf alle hierin beschriebenen Ausführungen zurückgegriffen werden. Auch ansonsten kann auf alle bereits erwähnten Varianten auch bezüglich des Verfahrens zurückgegriffen werden.

Störstrahlung kann beispielsweise von Schweißnahtprüfungen herrühren, welche in der Umgebung durchgeführt werden. In Industrieanlagen werden beispielsweise regelmäßig Schweißnähte an Rohrleitungen auf Risse untersucht. Dafür können Gammastrahlen mit sehr hoher Aktivität verwendet werden. Dementsprechend kann Störstrahlung entstehen. Derartige Störstrahlung kann auch noch in mehreren Hundert Metern Entfernung wirken bzw. eine Störung verursachen.

Punktstrahler bestehen in der Regel aus einer inneren Strahlerkapsel, die das radioaktive Material sicher einkapselt bzw. umschließt, und einer Abschirmung mit einem Verschlussmechanismus, der die Strahlung kontrolliert blockiert. Zusätzlich oder alternativ ist ein Punktstrahler eine zylindrische Kapsel, die wesentlich kleiner ist als ein Tischtennisball. In dieser Kapsel ist wiederum eine weitere, noch kleinere Kapsel eingeschlossen, die den radioaktiven Stoff enthält. Um die Sicherheit noch weiter zu erhöhen, kann auch eine dreifache Kapselung des radioaktiven Materials verwendet werden. Zusätzlich oder alternativ können Detektoren mit einem kleinen Szintillator als Punktdetektoren bezeichnet werden. Beispielsweise kann ein kleiner Zylinder als Szintillator verwendet werden, beispielsweise mit einem Durchmesser von 50 mm und/oder einer Höhe von 50 mm.

Grenzschalter sind wichtige Sicherheitseinrichtungen und/oder können insbesondere in der Prozessindustrie eingesetzt werden, beispielsweise wenn bzw. falls der Füllstand in einem Hohlkörper, insbesondere einem Tank oder einem Reaktor, gefährlich niedrig oder hoch werden kann und somit ein Leerlaufen oder ein Überfüllen verhindert werden soll. Die radiometrische Prozessmesstechnik kann eine solche Messaufgabe lösen, indem auf der Höhe des gewünschten Füllstands eine, insbesondere die, Strahlungs- bzw. Strahlenquelle und gegenüberliegend, insbesondere auf einer gegenüberliegenden Seite, auf etwa, insbesondere genau, gleicher Höhe ein, insbesondere die, Detektoreinrichtung, insbesondere die Punktdetektoren, angebracht werden.

Sobald das Hohlkörpermessgut, insbesondere das Tankmedium, den Strahlengang erreicht, wird die Strahlung absorbiert und der Grenzschalter wird getriggert. Bei sogenannten MIN-Grenzschaltern ist der Normalzustand, dass die Strahlung durch das Messgut bzw. das Messmedium absorbiert wird und der Grenzschalter ausgelöst wird, wenn bzw. falls Strahlung die Detektoreinrichtung erreicht, d.h. der Füllstand unterhalb des Strahlengangs sinkt. Der Grenzschalter triggert also, wenn bzw. falls mehr Strahlung die Detektoreinrichtung erreicht. Bei Ausführungen gemäß dem Stand der Technik kann allerdings nicht unterschieden werden, ob die Strahlung aufgrund des Füllstands im Hohlkörper, insbesondere im Tank, angestiegen ist oder aufgrund von Störstrahlung. Diese kann temporär vorhanden sein aufgrund von beispielsweise, insbesondere den, Schweißnahtprüfungen in der Umgebung. Der Einfluss der Störstrahlung kann von der Detektoreinrichtung noch registriert oder gemessen werden, auch wenn sich die Störstrahlquelle mehrere Hundert Meter entfernt oder sogar auf einem benachbarten Werksgelände befindet. Es ist deshalb wünschenswert, eine zuverlässige Erkennung und Unterdrückung von Störstrahlung zu haben. Für Schweißnahtprüfungen werden unterschiedliche Isotope eingesetzt, dadurch ist eine Unterscheidung über die Gamma-Energie nicht zuverlässig bzw. nicht immer möglich. Eine Unterscheidung über die Isotope ist beispielsweise auch dann nur eingeschränkt realisierbar, wenn bzw. falls die Messgeometrie bereits den Einsatz niederenergetischer Isotope wie beispielsweise Cs-137 oder Am-241 (Americium 241) voraussetzt, wodurch eine Ausblendung von niederenergetischen Gammas (Erhöhung der Messschwelle) nicht ausreicht.

Durch die hierin beschriebene Erfindung kann eine falsche Messung von Füllständen bei Störstrahlung verhindert werden. Es kann auch Störstrahlung erkannt werden. Die Erfindung funktioniert beispielsweise mit Cs-137 und Co-60 als Strahler, mit anderen Strahlern und auch mit beliebigen Störstrahlern. Zusätzlich oder alternativ wird eine Unterscheidung über eine Energie der Strahlung, insbesondere eine Energie- bzw. Kanalumstellung, nicht benötigt. Zusätzlich oder alternativ wird eine schnelle Reaktionszeit sichergestellt. Zusätzlich oder alternativ wird eine Strahlerquellenmodulation nicht benötigt.

### KURZBESCHREIBUNG DER ZEICHNUNGEN

Weitere Vorteile und Aspekte der Erfindung ergeben sich aus den Ansprüchen und aus der Beschreibung von Ausführungsbeispielen der Erfindung, die nachfolgenden anhand der Figuren erläutert sind. Dabei zeigen:
- Fig. 1: eine schematische Längsschnittansicht eines erfindungsgemäßen Systems aufweisend einen erfindungsgemäßen Grenzschalter aufweisend zwei Detektoren, insbesondere Punktdetektoren,
- Fig. 2: eine schematische Querschnittansicht des Systems der Fig. 1,
- Fig. 3: zeitliche Verläufe von Schaltsignalen der Detektoren der Fig. 1 bei einer Unterschreitung eines Minimal-Grenzstands und eine schematische Ansicht eines erfindungsgemäßen Verfahrens,
- Fig. 4: zeitliche Verläufe von den Schaltsignalen der Detektoren der Fig. 1 bei einem Vorhandensein von Störstrahlung und eine weitere schematische Ansicht des erfindungsgemäßen Verfahrens,
- Fig. 5a: einen zeitlichen Verlauf eines ersten Detektorsignals des ersten Detektors der Fig. 1,
- Fig. 5b: einen zeitlichen Verlauf eines zweiten Detektorsignals des zweiten Detektors der Fig. 1,
- Fig. 5c: einen zeitlichen Verlauf eines Unterschieds, insbesondere einer Differenz, zwischen dem ersten Detektorsignal der Fig. 5a und dem zweiten Detektorsignal der Fig. 5b und eine weitere schematische Ansicht des erfindungsgemäßen Verfahrens,
- Fig. 6: eine weitere schematische Längsschnittansicht eines nichterfindungsgemäßen Systems aufweisend einen nicht-erfindungsgemäßen Grenzschalter aufweisend einen Stabdetektor,
- Fig. 7: einen zeitlichen Verlauf eines Detektorsignals des Stabdetektors der Fig. 6 und/oder eines Punktdetektors der Fig. 1 bei einer Unterschreitung eines Minimal-Grenzstands und eine weitere schematische Ansicht eines nichterfindungsgemäßen Verfahrens, und
- Fig. 8: einen zeitlichen Verlauf des Detektorsignals des Stabdetektors der Fig. 6 und/oder des Punktdetektors der Fig. 1 bei einem Vorhandensein von Störstrahlung und eine weitere schematische Ansicht eines nichterfindungsgemäßen Verfahrens.

### DETAILLIERTE BESCHREIBUNG DER AUSFÜHRUNGSBEISPIELE

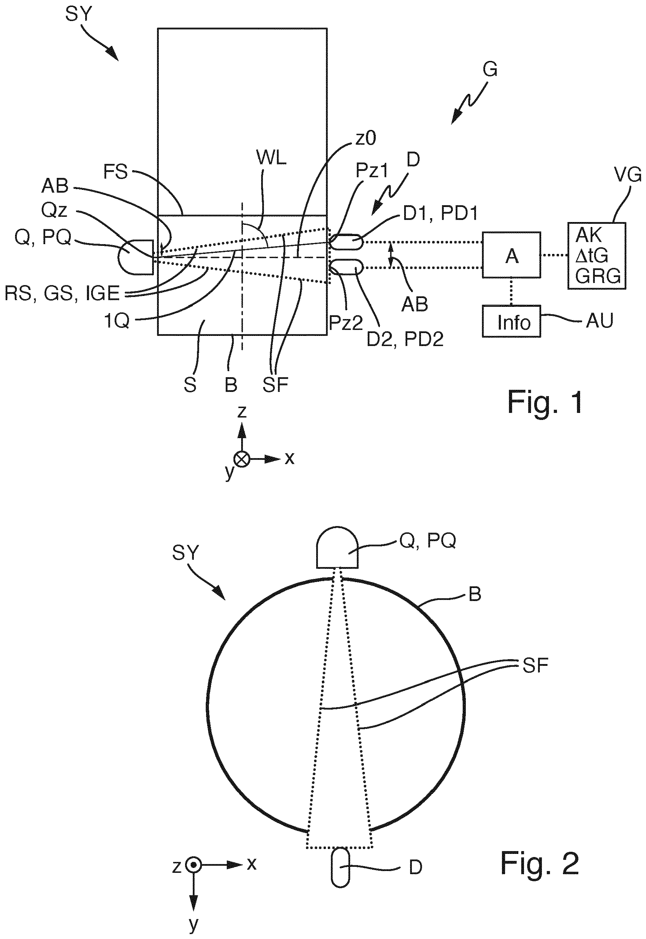

Fig. 1 und 2 zeigen ein erfindungsgemäßes System SY. Das System SY weist einen erfindungsgemäßen Grenzschalter G, einen Hohlkörper B und/oder mindestens eine Strahlungsquelle Q, insbesondere einen Punktstrahler PQ, auf.

Der Hohlkörper B ist zur Aufnahme eines Messguts S ausgebildet. Insbesondere ist das Messgut S innerhalb des Hohlkörpers B angeordnet.

Der Hohlkörper B kann befüllt werden, und es kann Messgut S daraus entnommen werden. Entsprechende Vorrichtungen sind nicht eingezeichnet, können jedoch einfach realisiert werden, beispielsweise indem das Messgut S durch eine Leitung von oben, insbesondere entgegen einer, insbesondere vertikalen, Richtung z, zugeführt wird und durch einen unten angebrachten Anschluss, insbesondere entgegen der Richtung z, entnommen wird. Das Messgut S erstreckt sich innerhalb des Hohlkörpers B bis zu einem Füllstand FS, wobei aufgrund von Befüll- und Entnahmeprozessen bzw. -vorgängen dieser Füllstand FS variabel ist.

Innerhalb des Hohlkörpers B ist ein Minimal-Grenzstand z0 vorgegeben bzw. vordefiniert, insbesondere welcher eine horizontale Ebene in, insbesondere horizontalen, Richtungen x, y darstellt. Es soll erkannt werden, wenn bzw. falls der Füllstand FS den Grenzstand z0 unterschreitet. Hierfür ist der Grenzschalter G vorgesehen, welcher nachfolgend beschrieben wird.

Mindestens die Strahlungsquelle Q ist zur Emission von radiometrischer Strahlung RS, insbesondere von Gammastrahlung GS mit einer diskreten Isotop-Gamma-Energie IGE, in mindestens das Messgut S ausgebildet, insbesondere emittiert.

Im Detail weist die Strahlungsquelle Q Co-60 und/oder Cs-137 auf, insbesondere ist Co-60 und/oder Cs-137.

Die Strahlungsquelle Q ist in Fig. 1 links von dem Hohlkörper B, insbesondere außerhalb an diesem, angeordnet. Insbesondere emittiert die Strahlungsquelle Q die Strahlung RS in den Hohlkörper B.

Die Strahlung RS erzeugt dabei ein Strahlungsfeld SF, welches sich vorliegend kegelförmig von links nach rechts, insbesondere in der Richtung x, aufweitet. Dadurch erhöht sich ein Querschnitt des Strahlungsfelds SF von links nach rechts. Bei dem gezeigten Füllstand FS, welcher über dem Minimal-Grenzstand z0 und über dem Strahlungsfeld SF liegt, verläuft die Strahlung RS vollständig durch das Messgut S und wird dadurch aufgrund bekannter Streu- und/oder Absorptionsmechanismen abgeschwächt.

Der Grenzschalter G ist zur Erkennung einer Unter- oder Überschreitung eines Minimal- oder Maximal-Grenzstands z0, in Fig. 1 zur Erkennung einer Unterschreitung des Minimal-Grenzstands z0, durch das Messgut S angeordnet innerhalb des Hohlkörpers ausgebildet, insbesondere erkennt. Der Grenzschalter G weist eine Detektoreinrichtung D und eine Auswerteeinrichtung A auf.

In Fig. 1 rechts von dem Hohlkörper B befindet sich die Detektoreinrichtung D bzw. ist rechts von diesem, insbesondere außerhalb an diesem, angeordnet, insbesondere gegenüber der Strahlungsquelle Q.

Die Detektoreinrichtung D ist zur Erfassung der Strahlung RS mindestens das Messgut S mindestens teilweise durchdringend an mindestens zwei verschiedenen Punkten Pz1, Pz2 entlang einer Änderungsrichtung z, insbesondere der vertikalen Richtung z, des Füllstands FS des Messguts S ausgebildet, insbesondere erfasst.

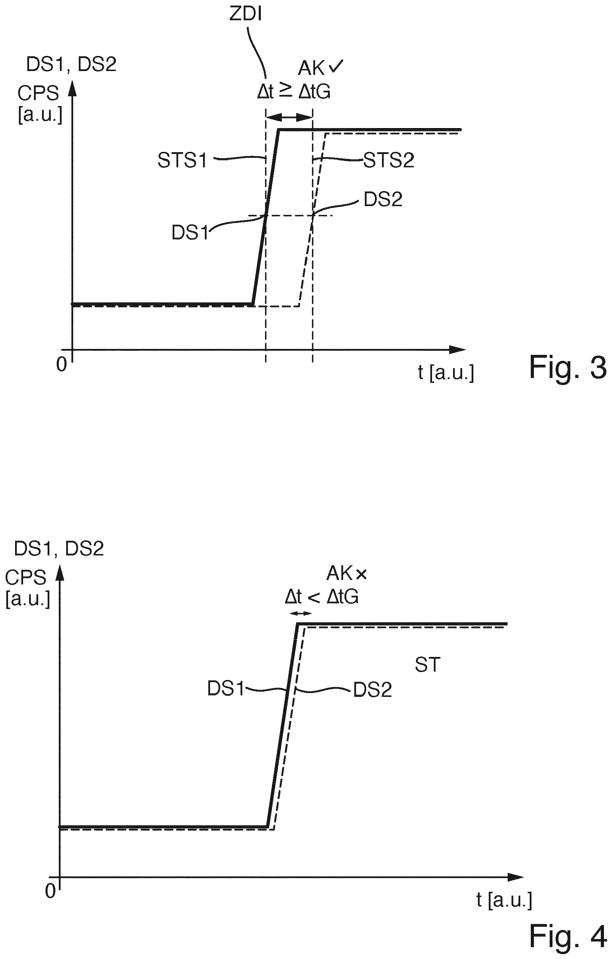

Die Auswerteeinrichtung A ist dazu ausgebildet, eine Änderung einer von der Detektoreinrichtung D an mindestens den zwei Punkten Pz1, Pz2 erfassten radiometrischen Strahlung RS zu erkennen, insbesondere erkennt, wie in Fig. 3 bis 5 gezeigt.

Des Weiteren ist die Auswerteeinrichtung A dazu ausgebildet, eine Änderungszeitdauer Δt oder eine der Änderungszeitdauer Δt korrespondierende Größe GR für die erkannte Änderung zu bestimmen, insbesondere bestimmt.

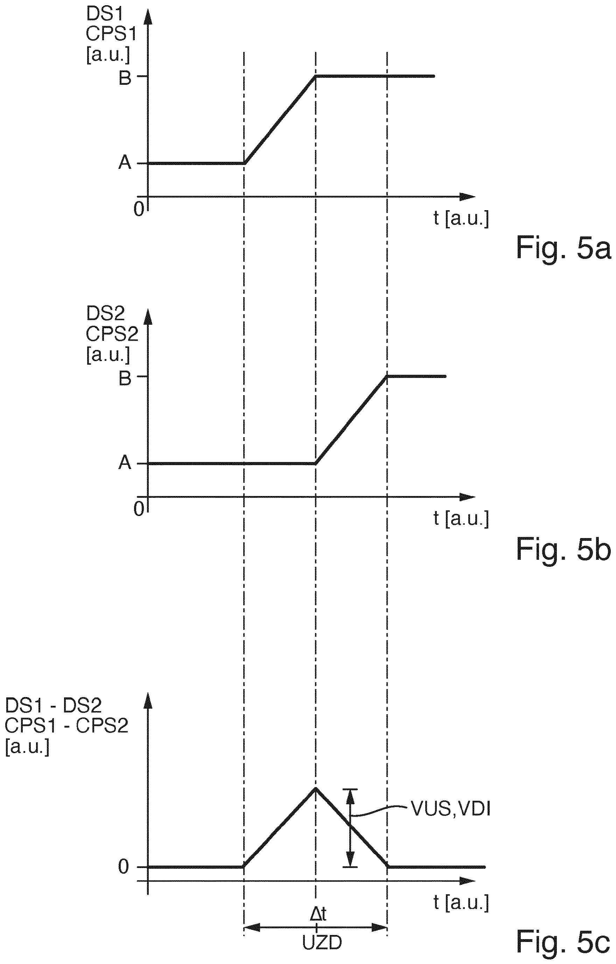

Außerdem ist die die Auswerteeinrichtung A dazu ausgebildet, falls die bestimmte Änderungszeitdauer Δt oder die Größe GR ein Änderungszeitkriterium AK erfüllt, wobei das Änderungszeitkriterium AK dafür charakteristisch ist, dass die Änderungszeitdauer Δt gleich oder größer als ein Zeitschwellenwert ΔtG ist, die Unter- oder Überschreitung zu bestimmen, insbesondere bestimmt, wie in Fig. 3 und 5c gezeigt.

Im Detail ist die Auswerteeinrichtung A dazu ausgebildet, falls die bestimmte Änderungszeitdauer Δt oder die Größe GR das Änderungszeitkriterium AK nicht erfüllt, ein Vorhandensein von Störstrahlung ST zu bestimmen, insbesondere bestimmt, wie in Fig. 4 gezeigt.

Weiter weist der Grenzschalter G eine Ausgabe- und/oder Übertragungseinrichtung AU auf. Die Ausgabe- und/oder Übertragungseinrichtung AU ist zur Ausgabe und/oder Übertragung einer, insbesondere binären, Information Info über die bestimmte Unter- oder Überschreitung, insbesondere und die bestimmte Störstrahlung ST, ausgebildet, insbesondere gibt aus und/oder überträgt.

Die Auswerteeinrichtung A ist mit der Ausgabe- und/oder Übertragungseinrichtung AU verbunden.

Damit können Werte ausgegeben werden, welche anschließend von anderen Einheiten weiterverarbeitet werden können.

Zudem weist der Grenzschalter G eine Vorgabeeinrichtung VG auf. Die Vorgabeeinrichtung VG ist zur variabel einstellbaren Vorgabe des Änderungszeitkriteriums AK und/oder des Zeitschwellenwerts ΔtG durch einen Benutzer ausgebildet, insbesondere gibt vor.

Die Auswerteeinrichtung A ist mit der Vorgabeeinrichtung VG verbunden.

Die Vorgabeeinrichtung VG ist dazu ausgebildet, Werte vorzugeben, welche von der Auswerteeinrichtung A verwendet werden. Hierzu gehören insbesondere das Änderungszeitkriterium AK und/oder der Zeitschwellenwert ΔtG und/oder ein Größenschwellenwert GRG.

Des Weiteren ist die Detektoreinrichtung D zur Anordnung mit mindestens den zwei Punkten Pz1, Pz2 in mindestens dem Strahlungsfeld SF mindestens der Strahlungsquelle Q, insbesondere mindestens des Punktstrahlers PQ, ausgebildet, insbesondere angeordnet.

Insbesondere ist die Detektoreinrichtung D zur Anordnung mit mindestens den zwei Punkten Pz1, Pz2 in dem selben Strahlungsfeld SF der Strahlungsquelle Q ausgebildet, insbesondere angeordnet.

Wie in Fig. 2 gezeigt, wird die Detektoreinrichtung D von dem Strahlungsfeld SF getroffen. Das Strahlungsfeld SF durchläuft dabei den Hohlkörper B, in welchem es sich bei Vorhandensein des Messguts S an der entsprechenden Stelle abschwächt.

In Fig. 1 weist die Detektoreinrichtung D einen ersten Detektor D1, insbesondere einen ersten Punktdetektor PD1, und einen von dem ersten Detektor D1 verschiedenen zweiten Detektor D2, insbesondere einen zweiten Punktdetektor PD2, auf. Der erste Detektor D1 ist zur Erfassung der Strahlung RS an einem ersten Punkt Pz1 der zwei Punkte ausgebildet, insbesondere erfasst, und der zweite Detektor D2 ist zur Erfassung der Strahlung RS an einem von dem ersten Punkt Pz1 verschiedenen zweiten Punkt Pz2 der zwei Punkte ausgebildet, insbesondere erfasst.

Die Detektoren D1, D2 sind wie gezeigt vertikal übereinander, insbesondere in der Richtung z, angeordnet.

In vertikaler Richtung z sind die Detektoren D1, D2 um einen Abstand AB voneinander beabstandet. Der erste Detektor D1 ist dabei weiter oben an dem ersten Punkt Pz1 angeordnet bzw. befindet sich an diesem. Der zweite Detektor D2 ist weiter unten an dem zweiten Punkt Pz2 angeordnet bzw. befindet sich an diesem.

Die beiden Detektoren D1, D2 sind dazu ausgebildet, am jeweiligen Punkt Pz1, Pz2 auftreffende Strahlung RS zu erfassen bzw. zu detektieren.

Die beiden Detektoren D1, D2 sind mit der Auswerteeinrichtung A verbunden, welche Signale auswerten kann, die von den Detektoren D1, D2 ansprechend auf die detektierte Strahlung geändert oder erzeugt werden.

Die Funktionalität zur Auswertung der Detektoren D1, D2 greift auf Mechanismen zurück, welche weiter unten beschrieben werden.

Der erste Detektor ist verursacht durch die Änderung der von dem ersten Detektor D1 an dem ersten Punkt Pz1 erfassten Strahlung RS zu einer Änderung eines ersten, insbesondere binären, Schaltsignals STS1 ausgebildet, insbesondere ändert, wie in Fig. 3 und 4 gezeigt. Der zweite Detektor D2 ist verursacht durch die Änderung der von dem zweiten Detektor D2 an dem zweiten Punkt Pz2 erfassten Strahlung RS zu einer Änderung eines zweiten, insbesondere binären, Schaltsignals STS2 ausgebildet, insbesondere ändert. Die Auswerteeinrichtung ist dazu ausgebildet, die Änderung basierend auf der Änderung des ersten Schaltsignals STS1 und der Änderung des zweiten Schaltsignals STS2 zu erkennen, insbesondere erkennt, und/oder die Änderungszeitdauer Δt basierend auf einer, insbesondere als eine, Zeitdifferenz ZDI zwischen der Änderung des ersten Schaltsignals STS1 und der Änderung des zweiten Schaltsignals STS2 zu bestimmen, insbesondere bestimmt.

Zusätzlich oder alternativ ist der erste Detektor D1 verursacht durch die Erfassung der Strahlung RS zur Erzeugung eines ersten Detektorsignals DS1, insbesondere eines ersten Zählratensignals CPS1, ausgebildet, insbesondere erzeugt, wie in Fig. 3, 4 und 5a gezeigt. Der zweite Detektor D2 ist verursacht durch die Erfassung der Strahlung RS zur Erzeugung eines zweiten Detektorsignals DS2, insbesondere eines zweiten Zählratensignals CPS2, ausgebildet, insbesondere erzeugt, wie in Fig. 3, 4 und 5b gezeigt. Die Auswerteeinrichtung A ist dazu ausgebildet, die Änderung basierend auf einem Vorhandensein eines durch die Änderung der erfassten Strahlung RS verursachten veränderten Unterschieds VUS, insbesondere einer veränderten Differenz VDI, zwischen dem erzeugten ersten Detektorsignal DS1 und dem erzeugten zweiten Detektorsignal DS2 zu erkennen, insbesondere erkennt, und/oder die Änderungszeitdauer Δt basierend auf einer, insbesondere als eine, Unterschiedszeitdauer UZD eines Vorhandenseins des durch die Änderung der erfassten Strahlung RS verursachten veränderten Unterschieds VUS, insbesondere der veränderten Differenz VDI, zwischen dem erzeugten ersten Detektorsignal DS1 und dem erzeugten zweiten Detektorsignal DS2 zu bestimmen, insbesondere bestimmt, wie in Fig. 5c gezeigt.

Wie bereits beschrieben, wird die Detektoreinrichtung D von dem Strahlungsfeld SF getroffen. Das Strahlungsfeld SF durchläuft dabei den Hohlkörper B, in welchem es sich bei Vorhandensein des Messguts S an der entsprechenden Stelle abschwächt.

Entscheidend ist, dass bei Absinken des Füllstands FS so weit, dass der Füllstand FS das Strahlungsfeld SF schneidet, die Strahlung RS nicht mehr überall durch das Messgut S abgeschwächt wird. Geht man beispielsweise davon aus, dass sich der Füllstand FS aufgrund eines kontinuierlichen Entnahmeprozesses bzw. -vorgangs gleichmäßig absenkt, so fällt er zunächst unter den ersten Punkt Pz1, so dass radiometrische Strahlung RS, welche auf den ersten Detektor D1 trifft, nicht mehr oder zumindest nicht mehr vollständig von dem Messgut S abgeschwächt wird. Fällt der Füllstand FS weiter, so kreuzt er auch den zweiten Punkt Pz2, so dass auch die auf den zweiten Detektor D2 auftreffende radiometrische Strahlung RS nicht mehr abgeschwächt wird. Dies kann dazu verwendet werden, um ein Unterschreiten des Minimal-Grenzstands z0 durch das Messgut S zu bestimmen bzw. zu erkennen bzw. zu detektieren. Insbesondere wird in diesem Fall zunächst die Intensität der von dem ersten Detektor D1 erfassten Strahlung RS ansteigen, und anschließend wird die von dem zweiten Detektor D2 erfasste Strahlung RS in ihrer Intensität ansteigen.

Ein solches Verhalten ist beispielsweise in Fig. 3 schematisch dargestellt. Mit durchgezogener, dicker Linie ist dabei das erste Detektorsignal DS1 des ersten Detektors D1 dargestellt. Mit gestrichelter Linie ist das zweite Detektorsignal DS2 des zweiten Detektors D2 dargestellt. Auf der horizontalen Achse ist die Zeit dargestellt, auf der vertikalen Achse ist die Zählrate (in cps = counts per second) dargestellt. Es werden grundsätzlich willkürliche Einheiten (a.u. = arbitrary units) verwendet.

Wie zu sehen ist, beginnen beide Detektorsignale DS1, DS2 zunächst bei einem niedrigen Wert. Zunächst steigt das erste Detektorsignal DS1 an, was darauf zurückzuführen ist, dass der Füllstand FS unter den ersten Punkt Pz1 sinkt. Etwas später steigt das zweite Detektorsignal DS2 an, was darauf zurückzuführen ist, dass der Füllstand FS unter den zweiten Punkt Pz2 sinkt. Mittig ist eine horizontale gestrichelte Linie eingezeichnet, welche einen Signalschwellenwert zur Änderung bzw. Auslösung des, insbesondere jeweiligen, Schaltsignals STS1, STS2 darstellt. Zunächst wird dabei wie gezeigt das erste Schaltsignal STS1 von dem ersten Detektorsignal DS1 ausgelöst bzw. geändert. Etwas später wird das zweite Schaltsignal STS2 von dem zweiten Detektorsignal DS2 ausgelöst bzw. geändert. Dies deutet wie schon erwähnt darauf hin, dass der Füllstand FS in einem überwiegend kontinuierlichen Prozess bzw. Vorgang unter den Minimal-Grenzstand z0 gefallen ist, was entsprechend bestimmt bzw. erkannt bzw. detektiert werden kann.

Insbesondere können/kann der erste Detektor D1 und/oder der zweite Detektor D2, insbesondere jeweils, zu der Änderung des, insbesondere jeweiligen, Schaltsignals STS1, STS2 verursacht durch Änderung des, insbesondere jeweiligen, Detektorsignals DS1, DS2, insbesondere durch Überschreitung, Erreichung und/oder Unterschreitung eines, insbesondere jeweiligen, Signalschwellenschwerts durch das, insbesondere jeweilige, Detektorsignal DS1, DS2, ausgebildet sein, insbesondere ändern/ändert.

Zwischen den beiden Schaltsignalen STS1, STS2 liegt die Zeitdifferenz ZDI bzw. die Änderungszeitdauer Δt. Die Änderungszeitdauer Δt wird mit dem bereits weiter oben erwähnten Zeitschwellenwert ΔtG verglichen. Ist die Änderungszeitdauer Δt größer oder gleich dem Zeitschwellenwert ΔtG, so ist das Änderungszeitkriterium AK erfüllt und es kann davon ausgegangen werden, dass der bestimmte bzw. detektierte Anstieg der beiden Detektorsignale DS1, DS2 tatsächlich auf einer Absenkung des Füllstands FS und nicht etwa auf Störstrahlung beruht.

Des Weiteren ist in Fig. 5c ein veränderter Unterschied VUS in Form der veränderten Differenz VDI gezeigt. Es handelt sich hierbei um die Differenz der beiden Detektorsignale DS1, DS2. Dabei ist zu sehen, dass dieser Wert zunächst null ist, dann ansteigt und schließlich wieder abfällt. Auch der Unterschied VUS kann zum Bestimmen einer Unterschreitung des Minimal-Grenzstands z0 und zum Bestimmen des Änderungszeitkriteriums AK entsprechend verwendet werden.

Insbesondere kann die Auswerteeinrichtung A dazu ausgebildet sein, die Änderung und/oder das Vorhandensein des, insbesondere veränderten, Unterschieds VUS basierend auf Überschreitung und/oder Erreichung eines Unterschiedsschwellenwerts durch den, insbesondere veränderten, Unterschied VUS zu erkennen, insbesondere erkennt.

Fig. 4 zeigt einen alternativen Verlauf der beiden Detektorsignale DS1, DS2 für den Fall, dass sich tatsächlich nicht der Füllstand ändert, sondern eine Störstrahlung auftritt. In diesem Fall ändern sich die beiden Detektorsignale DS1, DS2 wesentlich gleichläufiger bzw. gleichzeitiger als im in Fig. 3 dargestellten Fall. Dementsprechend ist die Änderungszeitdauer Δt deutlich kleiner und insbesondere kleiner als der Zeitschwellenwert ΔtG. Das Änderungszeitkriterium AK ist somit nicht erfüllt und es wird kein Unterschreiten des Minimal-Grenzstands z0 bestimmt. bzw. erkannt bzw. detektiert. Vielmehr wird bestimmt bzw. erkannt bzw. detektiert, dass Störstrahlung ST für den gezeigten Verlauf verantwortlich ist.

In Fig. 5a ist die Zählrate CPS1 des ersten Detektors D1 gezeigt. In Fig. 5b ist die Zählrate CPS2 des zweiten Detektors D2 gezeigt. In Fig. 5c ist die Differenz der beiden Zählraten, d.h. CPS1-CPS2, gezeigt. Dabei wird eine maximale Differenz VDI erreicht, wobei die zugehörige Kurve eine Dreiecksform hat. Die Gesamtdauer des Prozesses bzw. Vorgangs ist wiederum mit der Änderungszeitdauer Δt bzw. der Unterschiedszeitdauer UZD bezeichnet. Die dargestellte Differenz kann beispielsweise zur Erkennung einer Füllstandsänderung und insbesondere auch zur Unterscheidung zwischen einer tatsächlichen Füllstandsänderung und einem Einfluss von Störstrahlung verwendet werden.

Außerdem ist die Auswerteeinrichtung A dazu ausgebildet, eine ordnungsgemäße Funktion des Grenzschalters G, insbesondere des ersten Detektors D1 und des zweiten Detektors D2, basierend auf einer zeitlichen Reihenfolge der Änderung des ersten Schaltsignals STS1 und der Änderung des zweiten Schaltsignals STS2 und/oder des veränderten Unterschieds VUS zu bestimmen.

Schaltet zum Beispiel der untere bzw. zweite Detektor D2 vor dem oberen bzw. ersten Detektor D1, ist dies nicht plausibel.

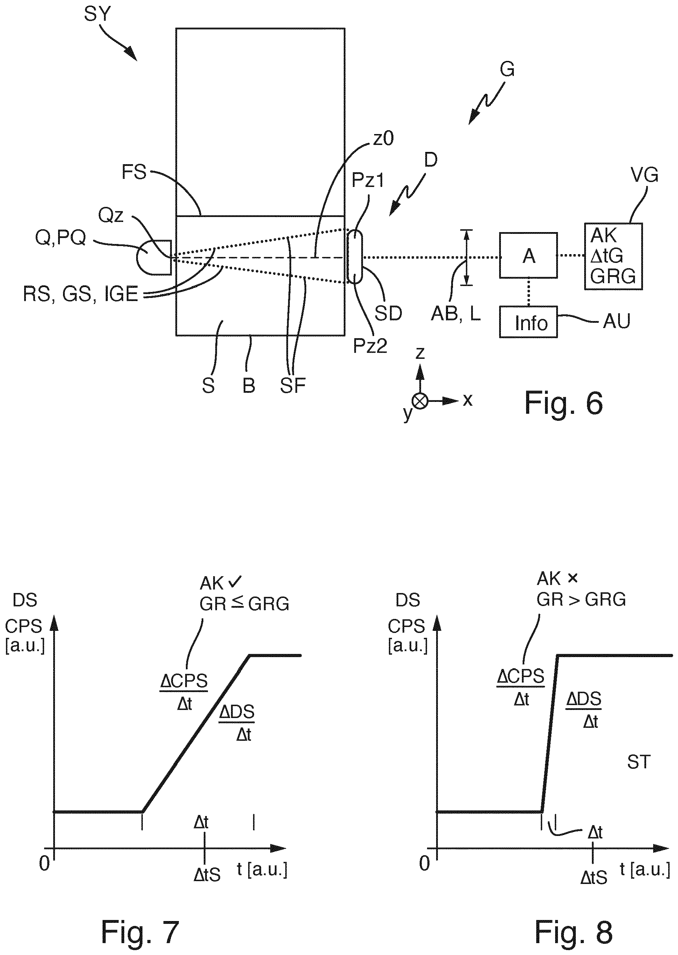

In Fig. 6 weist eine Detektoreinrichtung D einen Stabdetektor SD auf. Der Stabdetektor SD ist zur Erfassung einer Strahlung RS an mindestens zwei Punkten Pz1, Pz2 ausgebildet, insbesondere erfasst.

Zusätzlich oder alternativ weist in Fig. 1 eine Detektoreinrichtung D, insbesondere nur, einen, insbesondere einzigen, Punktdetektor PD1 auf. Der Punktdetektor PD1 ist zur Erfassung einer Strahlung RS an dem Punkt Pz1 ausgebildet, insbesondere erfasst.

Der Stabdetektor SD erstreckt sich entlang einer vertikalen Richtung z zwischen den beiden Punkten Pz1, Pz2. Eine Auflösung in Strahlung, welche am ersten Punkt Pz1 und welche am zweiten Punkt Pz2 ankommt, ist damit nicht mehr möglich. Ansonsten sei auf die obigen Ausführungen verwiesen.

Der Stabdetektor SD hat eine Länge L, welche dem Abstand AB der beiden Punkte Pz1, Pz2 entspricht.

Der Stabdetektor SD und/oder der Punktdetektor PD1 sind/ist verursacht durch die Erfassung der Strahlung RS zur Erzeugung eines Detektorsignals DS ausgebildet, insbesondere erzeugen/erzeugt. Eine Auswerteeinrichtung A ist dazu ausgebildet, eine Änderung basierend auf einer Änderung eines erzeugten Detektorsignals DS zu erkennen, insbesondere erkennt, und/oder eine Änderungszeitdauer Δt basierend auf einer, insbesondere als eine, Signaländerungszeitdauer ΔtS einer Änderung des erzeugten Detektorsignals DS oder einer Größe GR basierend auf einer, insbesondere als eine, zeitliche Steigung ΔDS/Δt des erzeugten Detektorsignals DS zu bestimmen, insbesondere bestimmt, wie in Fig. 7 und 8 gezeigt.

Insbesondere kann die Auswerteeinrichtung A dazu ausgebildet sein, die Änderung basierend auf Überschreitung und/oder Erreichung eines Signaländerungsschwellenwerts durch die Änderung des Detektorsignals DS zu erkennen, insbesondere erkennt.

Auch im Fall des Stabdetektors SD und/oder des, insbesondere einzigen, Punktdetektors PD1 kann eine Auswertung zur Erkennung einer Unterschreitung eines Minimal-Grenzstands z0 durchgeführt werden und diese kann von Störstrahlung ST abgegrenzt werden. Dies ist in den Fig. 7 und 8 dargestellt. Fig. 7 zeigt einen Verlauf des Detektorsignals DS des Stabdetektors SD und/oder des Punktdetektors PD1. Dabei erfolgt ein Anstieg in der Änderungszeitdauer Δt, wobei das Detektorsignal DS von einem niedrigen Wert auf einen hohen Wert, insbesondere linear, ansteigt. Die Steigung ist dabei in ΔDS/Δt bzw. ΔCPS/Δt angegeben, wobei letzteres die Größe GR zum Charakterisieren des Anstiegs darstellt. Vorliegend ist diese Größe GR kleiner oder gleich als ein zugehöriger Größenschwellenwert GRG. Dadurch ist bestimmt, dass das Änderungszeitkriterium AK erfüllt ist und es sich tatsächlich um eine bestimmte bzw. erkannte bzw. detektierte Änderung des Füllstands FS handelt.

Ebenso kann die Änderungszeitdauer Δt als die Signaländerungszeitdauer ΔtS verstanden werden und für einen Vergleich herangezogen werden. Ist sie lang, wie in Fig. 7 dargestellt, ist das Änderungszeitkriterium erfüllt.

Bei Fig. 8 hingegen ist die Änderungszeitdauer Δt wesentlich kürzer und der Anstieg ist entsprechend schneller. Die Größe GR ist somit größer als der zugehörige Größenschwellenwert GRG, so dass der hier dargestellte Kurvenverlauf auf eine Störstrahlung ST zurückzuführen ist. Eine Füllstandsänderung wird dementsprechend nicht bestimmt bzw. erkannt bzw. detektiert.

In Fig. 8 ist auch zu sehen, dass die Signaländerungszeitdauer ΔtS erheblich kürzer ist, was bei Verwendung für einen Vergleich zum gleichen Ergebnis führt.

Durch die hierin beschriebene Vorgehensweise kann somit in einfacher Weise eine Unterscheidung zwischen einer Füllstandsänderung und einem Einfluss von Störstrahlung getroffen werden, so dass ein Grenzschalter ohne zusätzlichen apparativen Aufwand erheblich störungsresistenter als bekannte Ausführungen ist.

Im Übrigen ist der Abstand AB zwischen den zwei Punkten Pz1, Pz2, und/oder dem Punkt Pz1 und einem Quellen-Punkt Qz, insbesondere dem ersten Detektor D1 und dem zweiten Detektor D2, und/oder dem Punktdetektor PD1 und der Strahlungsquelle Q, insbesondere entlang der Änderungsrichtung z, durch einen Benutzer variabel einstellbar.

Zusätzlich oder alternativ ist der Abstand AB zwischen den zwei Punkten Pz1, Pz2, und/oder dem Punkt Pz1 und dem Quellen-Punkt Qz, insbesondere dem ersten Detektor D1 und dem zweiten Detektor D2, und/oder dem Punktdetektor PD1 und der Strahlungsquelle Q, insbesondere entlang der Änderungsrichtung z, minimal 100 mm, insbesondere minimal 150 mm, und/oder maximal 500 mm, insbesondere maximal 250 mm, insbesondere 200 mm.

Zusätzlich oder alternativ ist die Länge L des Stabdetektors SD, insbesondere entlang der Änderungsrichtung z, minimal 100 mm, insbesondere minimal 150 mm, und/oder maximal 500 mm, insbesondere maximal 250 mm, insbesondere 200 mm.

Zusätzlich oder alternativ ist ein Winkel WL zwischen einer Strecke 1Q zwischen dem Punkt Pz1 und dem Quellen-Punkt Qz, insbesondere dem Punktdetektor PD1 und der Strahlungsquelle Q, und der Änderungsrichtung z maximal 85 °, insbesondere maximal 80 °, und/oder minimal 45°, insbesondere minimal 60 °, insbesondere 75 °.

Zusätzlich oder alternativ ist der Zeitschwellenwert ΔtG minimal 0,25 s, insbesondere minimal 0,5 s, und/oder maximal 5 s, insbesondere maximal 2 s, insbesondere 1 s.

Weiter zeigen Fig. 3, 4 und 5c ein erfindungsgemäßes Verfahren zur Erkennung der Unter- oder Überschreitung des Minimal- oder Maximal-Grenzstands z0 durch das Messgut S angeordnet innerhalb des Hohlkörpers B mittels des Grenzschalters G und/oder des Systems SY. Das Verfahren weist die Schritte auf:
- Erkennen der Änderung der von der Detektoreinrichtung D an mindestens den zwei Punkten Pz1, Pz2 erfassten radiometrischen Strahlung RS, insbesondere mittels der Auswerteeinrichtung A,
- Bestimmen der Änderungszeitdauer Δt oder der der Änderungszeitdauer Δt korrespondierenden Größe GR für die erkannte Änderung, insbesondere mittels der Auswerteeinrichtung A, und
- falls die bestimmte Änderungszeitdauer Δt oder die Größe GR das Änderungszeitkriterium AK erfüllt, wobei das Änderungszeitkriterium AK dafür charakteristisch ist, dass die Änderungszeitdauer Δt gleich oder größer als der Zeitschwellenwert ΔtG ist, Bestimmen der Unter- oder Überschreitung, insbesondere mittels der Auswerteeinrichtung A.

## Patentansprüche

1. Grenzschalter (G) zur Erkennung einer Unter- oder Überschreitung eines Minimal- oder Maximal-Grenzstands (z0) durch ein Messgut (S) angeordnet innerhalb eines Hohlkörpers (B), wobei der Grenzschalter (G) aufweist:
- eine Detektoreinrichtung (D), wobei die Detektoreinrichtung (D) zur Erfassung von radiometrischer Strahlung (RS) mindestens das Messgut (S) mindestens teilweise durchdringend an mindestens zwei verschiedenen Punkten (Pz1, Pz2) entlang einer Änderungsrichtung (z) eines Füllstands (FS) des Messguts (S) ausgebildet ist, und
- eine Auswerteeinrichtung (A), wobei die Auswerteeinrichtung (A) dazu ausgebildet ist,
- eine Änderung einer von der Detektoreinrichtung (D) an mindestens den zwei Punkten (Pz1, Pz2) erfassten radiometrischen Strahlung (RS) zu erkennen,
- eine Änderungszeitdauer (Δt) oder eine der Änderungszeitdauer (Δt) korrespondierende Größe (GR) für die erkannte Änderung zu bestimmen, und
- falls die bestimmte Änderungszeitdauer (Δt) oder die Größe (GR) ein Änderungszeitkriterium (AK) erfüllt, wobei das Änderungszeitkriterium (AK) dafür charakteristisch ist, dass die Änderungszeitdauer (Δt) gleich oder größer als ein Zeitschwellenwert (ΔtG) ist, die Unter- oder Überschreitung zu bestimmen,
- wobei die Detektoreinrichtung (D) einen ersten Detektor (D1), insbesondere einen ersten Punktdetektor (PD1), aufweist,
**dadurch gekennzeichnet, dass** die Detektoreinrichtung (D)
einen von dem ersten Detektor (D1) verschiedenen zweiten Detektor (D2), insbesondere einen zweiten Punktdetektor (PD2), aufweist, wobei der erste Detektor (D1) zur Erfassung der Strahlung (RS) an einem ersten Punkt (Pz1) der zwei Punkte (Pz1, Pz2) ausgebildet ist, und wobei der zweite Detektor (D2) zur Erfassung der Strahlung (RS) an einem von dem ersten Punkt (Pz1) verschiedenen zweiten Punkt (Pz2) der zwei Punkte ausgebildet ist, und dass die Auswerteeinrichtung (A) dazu ausgebildet ist, die Änderung basierend auf der von dem ersten Detektor (D1) an dem ersten Punkt (Pz1) erfassten Strahlung (RS) und der von dem zweiten Detektor (D2) an dem zweiten Punk (Pz2) erfassten Strahlung (RS) zu erkennen.

2. Grenzschalter (G) nach Anspruch 1,
- wobei die Auswerteeinrichtung (A) dazu ausgebildet ist,
- falls die bestimmte Änderungszeitdauer (Δt) oder die Größe (GR) das Änderungszeitkriterium (AK) nicht erfüllt, ein Vorhandensein von Störstrahlung (ST) zu bestimmen.

3. Grenzschalter (G) nach Anspruch 1 oder 2,
- wobei der Grenzschalter (G) eine Ausgabe- und/oder Übertragungseinrichtung (AU) aufweist, wobei die Ausgabe- und/oder Übertragungseinrichtung (AU) zur Ausgabe und/oder Übertragung einer, insbesondere binären, Information (Info) über die bestimmte Unter- oder Überschreitung, insbesondere und die bestimmte Störstrahlung (ST), ausgebildet ist.

4. Grenzschalter (G) nach einem der vorhergehenden Ansprüche,
- wobei der Grenzschalter (G) eine Vorgabeeinrichtung (VG) aufweist, wobei die Vorgabeeinrichtung (VG) zur variabel einstellbaren Vorgabe des Änderungszeitkriteriums (AK) und/oder des Zeitschwellenwerts (ΔtG) durch einen Benutzer ausgebildet ist.

5. Grenzschalter (G) nach einem der vorhergehenden Ansprüche,
- wobei die Detektoreinrichtung (D) zur Anordnung mit mindestens den zwei Punkten (Pz1, Pz2) in mindestens einem Strahlungsfeld (SF) mindestens einer Strahlungsquelle (Q), insbesondere mindestens eines Punktstrahlers (PQ), ausgebildet ist, wobei mindestens die Strahlungsquelle (Q) zur Emission der Strahlung (RS), insbesondere von Gammastrahlung (GS) mit einer diskreten Isotop-Gamma-Energie (IGE), in mindestens das Messgut (S) ausgebildet ist,
- insbesondere wobei die Detektoreinrichtung (D) zur Anordnung mit mindestens den zwei Punkten (Pz1, Pz2) in dem selben Strahlungsfeld (SF) der Strahlungsquelle (Q) ausgebildet ist.

6. Grenzschalter (G) nach einem der vorhergehenden Ansprüche,
- wobei der erste Detektor (D1) verursacht durch die Änderung der von dem ersten Detektor (D1) an dem ersten Punkt (Pz1) erfassten Strahlung (RS) zu einer Änderung eines ersten, insbesondere binären, Schaltsignals (STS1) ausgebildet ist,
- wobei der zweite Detektor (D2) verursacht durch die Änderung der von dem zweiten Detektor (D2) an dem zweiten Punkt (Pz2) erfassten Strahlung (RS) zu einer Änderung eines zweiten, insbesondere binären, Schaltsignals (STS2) ausgebildet ist, und
- wobei die Auswerteeinrichtung (A) dazu ausgebildet ist,
- die Änderung basierend auf der Änderung des ersten Schaltsignals (STS1) und der Änderung des zweiten Schaltsignals (STS2) zu erkennen, und/oder
- die Änderungszeitdauer (Δt) basierend auf einer, insbesondere als eine, Zeitdifferenz (ZDI) zwischen der Änderung des ersten Schaltsignals (STS1) und der Änderung des zweiten Schaltsignals (STS2) zu bestimmen.

7. Grenzschalter (G) nach einem der vorhergehenden Ansprüche,
- wobei der erste Detektor (D1) verursacht durch die Erfassung der Strahlung (RS) zur Erzeugung eines ersten Detektorsignals (DS1) ausgebildet ist,
- wobei der zweite Detektor (D2) verursacht durch die Erfassung der Strahlung (RS) zur Erzeugung eines zweiten Detektorsignals (DS2) ausgebildet ist, und
- wobei die Auswerteeinrichtung (A) dazu ausgebildet ist,
- die Änderung basierend auf einem Vorhandensein eines durch die Änderung der erfassten Strahlung (RS) verursachten veränderten Unterschieds (VUS), insbesondere einer veränderten Differenz (VDI), zwischen dem erzeugten ersten Detektorsignal (DS1) und dem erzeugten zweiten Detektorsignal (DS2) zu erkennen, und/oder
- die Änderungszeitdauer (Δt) basierend auf einer, insbesondere als eine, Unterschiedszeitdauer (UZD) eines Vorhandenseins eines durch die Änderung der erfassten Strahlung (RS) verursachten veränderten Unterschieds (VUS), insbesondere einer veränderten Differenz (VDI), zwischen dem erzeugten ersten Detektorsignal (DS1) und dem erzeugten zweiten Detektorsignal (DS2) zu bestimmen.

8. Grenzschalter (G) nach Anspruch 6 oder 7,
- wobei die Auswerteeinrichtung (A) dazu ausgebildet ist,
- eine ordnungsgemäße Funktion des Grenzschalters (G), insbesondere des ersten Detektors (D1) und des zweiten Detektors (D2), basierend auf einer zeitlichen Reihenfolge der Änderung des ersten Schaltsignals (STS1) und der Änderung des zweiten Schaltsignals (STS2) und/oder des veränderten Unterschieds (VUS) zu bestimmen.

9. Grenzschalter (G) nach einem der vorhergehenden Ansprüche,
- wobei ein Abstand (AB) zwischen den zwei Punkten (Pz1, Pz2), insbesondere dem ersten Detektor (D1) und dem zweiten Detektor (D2), insbesondere entlang der Änderungsrichtung (z), durch einen Benutzer variabel einstellbar ist, und/oder
- wobei ein Abstand (AB) zwischen den zwei Punkten (Pz1, Pz2), insbesondere dem ersten Detektor (D1) und dem zweiten Detektor (D2), insbesondere entlang der Änderungsrichtung (z), minimal 100 mm, insbesondere minimal 150 mm, und/oder maximal 500 mm, insbesondere maximal 250 mm, insbesondere 200 mm, ist, und/oder
- wobei der Zeitschwellenwert (ΔtG) minimal 0,25 s, insbesondere minimal 0,5 s, und/oder maximal 5 s, insbesondere maximal 2 s, insbesondere 1 s, ist.

10. System (SY), wobei das System (SY) aufweist:
- einen Grenzschalter (G) nach einem der vorhergehenden Ansprüche, und
- den Hohlkörper (B), wobei der Hohlkörper (B) zur Aufnahme des Messguts (S) ausgebildet ist, und/oder mindestens eine, insbesondere die, Strahlungsquelle (Q), insbesondere einen Punktstrahler (PQ), insbesondere wobei mindestens die Strahlungsquelle (Q) zur Emission der Strahlung (RS), insbesondere von Gammastrahlung (GS) mit einer diskreten Isotop-Gamma-Energie (IGE), in mindestens das Messgut (S) ausgebildet ist.

11. System (SY) nach Anspruch 10,
- wobei die Strahlungsquelle (Q) Co-60 und/oder Cs-137 aufweist, insbesondere ist.

12. Verfahren zur Erkennung einer Unter- oder Überschreitung eines Minimal- oder Maximal-Grenzstands (z0) durch ein Messgut (S) angeordnet innerhalb eines Hohlkörpers (B) mittels eines Grenzschalters (G) nach einem der Ansprüche 1 bis 9 und/oder eines Systems (SY) nach Anspruch 10 oder 11, wobei das Verfahren die Schritte aufweist:
- Erkennen der Änderung der von der Detektoreinrichtung (D) an mindestens den zwei Punkten (Pz1, Pz2) erfassten radiometrischen Strahlung (RS),
- Bestimmen der Änderungszeitdauer (Δt) oder der der Änderungszeitdauer (Δt) korrespondierenden Größe (GR) für die erkannte Änderung, und
- falls die bestimmte Änderungszeitdauer (Δt) oder die Größe (GR) das Änderungszeitkriterium (AK) erfüllt, wobei das Änderungszeitkriterium (AK) dafür charakteristisch ist, dass die Änderungszeitdauer (Δt) gleich oder größer als der Zeitschwellenwert (ΔtG) ist, Bestimmen der Unter- oder Überschreitung.

## Claims

1. Limit switch (G) for identifying whether a measured material (S) arranged within a hollow body (B) undershoots or exceeds a minimum or maximum limit level (z0), wherein the limit switch (G) comprises:
- a detector device (D), wherein the detector device (D) is designed to record radiometric radiation (RS) of at least the measured material (S) in an at least partly penetrating manner at at least two different points (Pzl, Pz2) along a direction of change (z) of a fill level (FS) of the measured material (S), and
- an evaluation device (A), wherein the evaluation device (A) is designed
- to identify a change in a radiometric radiation (RS) recorded by the detector device (D) at at least the two points (Pz1, Pz2),
- to determine a change period (Δt) or a variable (GR) corresponding to the change period (Δt) for the identified change, and,
- if the determined change period (Δt) or the variable (GR) satisfies a change criterion (AK), wherein the change criterion (AK) is characteristic of the fact that the change period (Δt) is equal to or greater than a time threshold value (ΔtG), to determine the undershooting or exceeding,
- wherein the detector device (D) comprises a first detector (D1), in particular a first point detector (PD1), **characterized in that** the detector device (D) comprises a second detector (D2), in particular a second point detector (PD2), different from the first detector (D1), wherein the first detector (D1) is designed to record the radiation (RS) at a first point (Pz1) of the two points (Pz1, Pz2), and wherein the second detector (D2) is designed to record the radiation (RS) at a second point (Pz2) of the two points, different from the first point (Pz1), and **in that** the evaluation device (A) is designed to identify the change based on the radiation (RS) recorded by the first detector (D1) at the first point (Pz1) and the radiation (RS) recorded by the second detector (D2) at the second point (Pz2).

2. Limit switch (G) according to Claim 1,
- wherein the evaluation device (A) is designed
- to determine the presence of stray radiation (ST) if the determined change period (Δt) or the variable (GR) does not satisfy the change criterion (AK).

3. Limit switch (G) according to Claim 1 or 2,
- wherein the limit switch (G) comprises an output and/or transmission device (AU), wherein the output and/or transmission device (AU) is designed to output and/or transmit a piece of, in particular binary, information (Info) about the determined undershooting or exceeding, in particular and the determined stray radiation (ST).

4. Limit switch (G) according to any one of the preceding claims,
- wherein the limit switch (G) comprises a specification device (VG), wherein the specification device (VG) is designed for the variably adjustable specification of the change criterion (AK) and/or the time threshold value (ΔtG) by way of a user.

5. Limit switch (G) according to any one of the preceding claims,
- wherein the detector device (D) is designed for arrangement with at least the two points (Pz1, Pz2) in at least one radiation field (SF) of at least one radiation source (Q), in particular at least one point emitter (PQ), wherein at least the radiation source (Q) is designed for emission of the radiation (RS), in particular gamma radiation (GS) with a discrete isotope gamma energy (IGE), in at least the measured material (S),
- in particular wherein the detector device (D) is designed for arrangement with at least the two points (Pz1, Pz2) in the same radiation field (SF) of the radiation source (Q).

6. Limit switch (G) according to any one of the preceding claims,
- wherein the first detector (D1) is designed to change a first, in particular binary, switching signal (STS1), caused by the change in the radiation (RS) recorded by the first detector (D1) at the first point (Pz1),
- wherein the second detector (D2) is designed to change a second, in particular binary, switching signal (STS2), caused by the change in the radiation (RS) recorded by the second detector (D2) at the second point (Pz2), and
- wherein the evaluation device (A) is designed
- to identify the change based on the change in the first switching signal (STS1) and the change in the second switching signal (STS2), and/or
- to determine the change period (Δt) based on an, in particular as a, time difference (ZDI) between the change in the first switching signal (STS1) and the change in the second switching signal (STS2).

7. Limit switch (G) according to any one of the preceding claims,
- wherein the first detector (D1) is designed, caused by the recording of the radiation (RS), to generate a first detector signal (DS1),
- wherein the second detector (D2) is designed, caused by the recording of the radiation (RS), to generate a second detector signal (DS2), and
- wherein the evaluation device (A) is designed
- to identify the change based on the presence of a changed variation (VUS), in particular a changed difference (VDI), caused by the change in the recorded radiation (RS), between the generated first detector signal (DS1) and the generated second detector signal (DS2), and/or
- to identify the change period (Δt) based on an, in particular as a, distinction period (UZD) of the presence of a changed variation (VUS), in particular a changed difference (VDI), caused by the change in the recorded radiation (RS), between the generated first detector signal (DS1) and the generated second detector signal (DS2).

8. Limit switch (G) according to Claim 6 or 7,
- wherein the evaluation device (A) is designed
- to determine a proper function of the limit switch (G), in particular the first detector (D1) and the second detector (D2), based on a chronological order of the change in the first switching signal (STS1) and the change in the second switching signal (STS2) and/or the changed variation (VUS).

9. Limit switch (G) according to any one of the preceding claims,
- wherein a distance (AB) between the two points (Pz1, Pz2), in particular the first detector (D1) and the second detector (D2), in particular along the direction of change (z), is able to be adjusted variably by way of a user, and/or
- wherein a distance (AB) between the two points (Pz1, Pz2), in particular the first detector (D1) and the second detector (D2), in particular along the direction of change (z), is a minimum of 100 mm, in particular a minimum of 150 mm, and/or a maximum of 500 mm, in particular a maximum of 250 mm, in particular 200 mm, and/or
- wherein the time threshold value (ΔtG) is a minimum of 0.25 s, in particular a minimum of 0.5 s, and/or a maximum of 5 s, in particular a maximum of 2 s, in particular 1 s.

10. System (SY), wherein the system (SY) comprises:
- a limit switch (G) according to any one of the preceding claims, and
- the hollow body (B), wherein the hollow body (B) is designed for accommodating the measured material (S), and/or at least one, in particular the, radiation source (Q), in particular a point emitter (PQ), in particular wherein at least the radiation source (Q) is designed for emission of the radiation (RS), in particular gamma radiation (GS) with a discrete isotope gamma energy (IGE), in at least the measured material (S).

11. System (SY) according to Claim 10,
- wherein the radiation source (Q) comprises, in particular is, Co-60 and/or Cs-137.

12. Method for identifying whether a measured material (S) arranged within a hollow body (B) undershoots or exceeds a minimum or maximum limit level (z0) by means of a limit switch (G) according to any one of Claims 1 to 9 and/or a system (SY) according to Claim 10 or 11, wherein the method comprises the steps of:
- identifying the change in the radiometric radiation (RS) recorded by the detector device (D) at at least the two points (Pzl, Pz2),
- determining the change period (Δt) or the variable (GR) corresponding to the change period (Δt) for the identified change, and,
- if the determined change period (Δt) or the variable (GR) satisfy the change criterion (AK), wherein the change criterion (AK) is characteristic of the fact that the change period (Δt) is equal to or greater than the time threshold value (ΔtG), determining the undershooting or exceeding.

## Revendications

1. Commutateur à limite (G) pour la reconnaissance d'un franchissement vers le bas ou vers le haut d'un niveau limite minimal ou maximal (z0) par un produit à mesurer (S) disposé à l'intérieur d'un corps creux (B), le détecteur de limite (G) possédant :
- un dispositif de détection (D), le dispositif de détection (D) étant configuré pour détecter un rayonnement radiométrique (RS) qui traverse au moins partiellement au moins le produit à mesurer (S) en au moins deux points (Pz1, Pz2) différents le long d'une direction de variation (z) d'un niveau de remplissage (FS) du produit à mesurer (S), et
- un dispositif d'évaluation (A), le dispositif d'évaluation (A) étant configuré pour,
- reconnaître une modification d'un rayonnement radiométrique (RS) détecté par le dispositif de détection (D) en au moins les deux points (Pz1, Pz2),
- déterminer une durée de modification (Δt) ou une grandeur (GR) correspondant à la durée de modification (Δt) pour la modification détectée, et
- dans le cas où la durée de modification (Δt) ou la grandeur (GR) déterminée satisfait un critère de durée de modification (AK), le critère de durée de modification (AK) étant caractéristique du fait que la durée de modification (Δt) est égale ou supérieure à une valeur de seuil de temps (ΔtG), déterminer le franchissement vers le bas ou vers le haut,
- le dispositif de détection (D) possédant un premier détecteur (D1), notamment un premier détecteur ponctuel (PD1), **caractérisé en ce que** le dispositif de détection (D) possède un deuxième détecteur (D2) différent du premier détecteur (D1), notamment un deuxième détecteur ponctuel (PD2), le premier détecteur (D1) étant configuré pour détecter le rayonnement (RS) au niveau d'un premier point (Pz1) des deux points (Pz1, Pz2), et le deuxième détecteur (D2) étant configuré pour détecter le rayonnement (RS) au niveau d'un deuxième point (Pz2) des deux points, différent du premier point (Pz1), et **en ce que** le dispositif d'évaluation (A) est configuré pour reconnaître la modification en se basant sur le rayonnement (RS) détecté par le premier détecteur (D1) au niveau du premier point (Pz1) et du rayonnement (RS) détecté par le deuxième détecteur (D2) au niveau du deuxième point (Pz2).

2. Commutateur à limite (G) selon la revendication 1,
- le dispositif d'évaluation (A) étant configuré pour,
- dans le cas où la durée de modification déterminée (Δt) ou la grandeur (GR) ne satisfait pas au critère de durée de modification (AK), déterminer la présence d'un rayonnement parasite (ST).

3. Commutateur à limite (G) selon la revendication 1 ou 2,
- le commutateur à limite (G) possédant un dispositif de sortie et/ou de transmission (AU), le dispositif de sortie et/ou de transmission (AU) étant configuré pour la sortie et/ou la transmission d'une information (Info), notamment binaire, à propos du franchissement vers le bas ou vers le haut déterminé, notamment et le rayonnement parasite (ST) déterminé.

4. Commutateur à limite (G) selon l'une des revendications précédentes,
- le commutateur à limite (G) possédant un dispositif de prédéfinition (VG), le dispositif de prédéfinition (VG) étant configuré pour la prédéfinition réglable de manière variable du critère de durée de modification (AK) et/ou de la valeur de seuil de temps (ΔtG) par un utilisateur.

5. Commutateur à limite (G) selon l'une des revendications précédentes,
- le dispositif de détection (D) étant configuré pour être disposé avec au moins les deux points (Pz1, Pz2) dans au moins un champ de rayonnement (SF) d'au moins une source de rayonnement (Q), notamment d'au moins un dispositif de rayonnement ponctuel (PQ), au moins la source de rayonnement (Q) étant configurée pour émettre le rayonnement (RS), notamment un rayonnement gamma (GS) avec une énergie isotopique gamma (IGE) discrète, dans au moins le produit à mesurer (S),
- le dispositif de détection (D) étant notamment configuré pour être disposé avec au moins les deux points (Pz1, Pz2) dans le même champ de rayonnement (SF) de la source de rayonnement (Q).

6. Commutateur à limite (G) selon l'une des revendications précédentes,
- le premier détecteur (D1) étant configuré pour une modification d'un premier signal de commutation (STS1), notamment binaire, provoquée par la modification du rayonnement (RS) détecté par le premier détecteur (D1) au niveau du premier point (Pz1),
- le deuxième détecteur (D2) étant configuré pour une modification d'un deuxième signal de commutation (STS2), notamment binaire, provoquée par la modification du rayonnement (RS) détecté par le deuxième détecteur (D2) au niveau du deuxième point (Pz2), et
- le dispositif d'évaluation (A) étant configuré pour,
- reconnaître la modification sur la base de la modification du premier signal de commutation (STS1) et de la modification du deuxième signal de commutation (STS2), et/ou
- déterminer la durée de modification (Δt) sur la base d'une, notamment sous la forme d'une, différence de temps (ZDI) entre la modification du premier signal de commutation (STS1) et la modification du deuxième signal de commutation (STS2).

7. Commutateur à limite (G) selon l'une des revendications précédentes,
- le premier détecteur (D1) étant configuré pour générer un premier signal de détecteur (DS1) provoqué par la détection du rayonnement (RS),
- le deuxième détecteur (D2) étant configuré pour générer un deuxième signal de détecteur (DS2) provoqué par la détection du rayonnement (RS), et
- le dispositif d'évaluation (A) étant configuré pour,
- reconnaître la modification sur la base d'une présence d'une disparité modifiée (VUS), notamment d'une différence modifiée (VDI), provoquée par la modification du rayonnement détecté (RS), entre le premier signal de détecteur généré (DS1) et le deuxième signal de détecteur généré (DS2), et/ou
- déterminer la durée de modification (Δt) sur la base d'une, notamment sous la forme d'une, durée de disparité (UZD) d'une présence d'une disparité modifiée (VUS), notamment d'une différence modifiée (VDI), provoquée par la modification du rayonnement détecté (RS), entre le premier signal de détecteur généré (DS1) et le deuxième signal de détecteur généré (DS2).

8. Commutateur à limite (G) selon la revendication 6 ou 7,
- le dispositif d'évaluation (A) étant configuré pour,
- déterminer un fonctionnement correct du commutateur à limite (G), notamment du premier détecteur (D1) et du deuxième détecteur (D2), sur la base d'une séquence temporelle de la modification du premier signal de commutation (STS1) et de la modification du deuxième signal de commutation (STS2) et/ou de la disparité modifiée (VUS).

9. Commutateur à limite (G) selon l'une des revendications précédentes,
- un écart (AB) entre les deux points (Pz1, Pz2), notamment le premier détecteur (D1) et le deuxième détecteur (D2), notamment le long de la direction de modification (z), pouvant être réglé de manière variable par un utilisateur, et/ou
- un écart (AB) entre les deux points (Pz1, Pz2), notamment le premier détecteur (D1) et le deuxième détecteur (D2), notamment le long de la direction de modification (z), étant au minimum de 100 mm, notamment au minimum de 150 mm, et/ou au maximum de 500 mm, notamment au maximum de 250 mm, notamment de 200 mm, et/ou
- la valeur seuil de temps (ΔtG) étant au minimum de 0,25 s, notamment au minimum de 0,5 s, et/ou au maximum de 5 s, notamment au maximum de 2 s, notamment de 1 s.

10. Système (SY), le système (SY) possédant :
- un commutateur à limite (G) selon l'une des revendications précédentes, et
- le corps creux (B), le corps creux (B) étant configuré pour recevoir le produit à mesurer (S), et/ou au moins une, notamment la, source de rayonnement (Q), notamment un dispositif de rayonnement ponctuel (PQ), au moins la source de rayonnement (Q) étant notamment configurée pour émettre le rayonnement (RS), notamment un rayonnement gamma (GS) avec une énergie isotopique gamma (IGE) discrète, dans au moins le produit à mesurer (S) .

11. Système (SY) selon la revendication 10,
- la source de rayonnement (Q) possédant, notamment étant, du Co-60 et/ou du Cs-137.

12. Procédé de reconnaissance d'un franchissement vers le bas ou vers le haut d'un niveau limite minimal ou maximal (z0) par un produit à mesurer (S) disposé à l'intérieur d'un corps creux (B) au moyen d'un commutateur à limite (G) selon l'une des revendications 1 à 9 et/ou d'un système (SY) selon la revendication 10 ou 11, le procédé comprenant les étapes suivantes :
- reconnaissance d'une modification du rayonnement radiométrique (RS) détecté par le dispositif de détection (D) en au moins les deux points (Pz1, Pz2),
- détermination d'une durée de modification (Δt) ou d'une grandeur (GR) correspondant à la durée de modification (Δt) pour la modification détectée, et
- dans le cas où la durée de modification (Δt) ou la grandeur (GR) déterminée satisfait le critère de durée de modification (AK), le critère de durée de modification (AK) étant caractéristique du fait que la durée de modification (Δt) est égale ou supérieure à la valeur de seuil de temps (ΔtG), détermination du franchissement vers le bas ou vers le haut.
